# EUROPEAN PATENT APPLICATION

(11) **EP 4 385 679 A1**
(43) Date of publication of application: **19.06.2024**
(21) Application number: 22855735.1
(22) Date of filing: 14.06.2022
(51) Int. Cl.: B25J 9/22, G05B 19/4093, B23K 9/127, B23K 31/00

(54) **ROBOT TEACHING DATA CREATION SYSTEM AND PROGRAM**

(30) Priority: 11.08.2021 JP 2021131378
(71) Applicant: Jsol Corporation, Tokyo 102-0074 (JP)
(72) Inventor: KUNUGI, Atsushi, Osaka-shi, Osaka 550-0001 (JP); KONNO, Takahiro, Osaka-shi, Osaka 550-0001 (JP); HIROI, Shinya, Osaka-shi, Osaka 550-0001 (JP)
(74) Representative: Müller-Boré & Partner Patentanwälte PartG mbB
(86) International application number: PCT/JP2022/023772
(87) International publication number: WO 2023/017671

(57) **Abstract**

A teaching data generation system (400) of the present invention includes a teaching data reconstruction process (S3) of reconstructing teaching data by adjusting a welding order, avoidance indication points (P0, P1, P7 to P9, P15, and P16), and an avoidance order. The teaching data reconstruction process (S3) includes a group shuffling process (S32) of shuffling an order of a plurality of welding groups in accordance with a corrected welding order (D9) for reducing a welding deformation of members (100, 104a, and 104b).

## Description

### TECHNICAL FIELD

The present invention relates to a robot teaching data generation system and a program.

### BACKGROUND ART

In a case where a structure is manufactured by welding a plurality of members, a welding robot including a rotatable joint may be used.

The welding robot described above is configured to perform a desired operation by driving the joint based on predetermined teaching data. This teaching data includes a rotation angle of the joint for operating the welding robot, and is determined so that, for example, the welding robot can perform an operation without interference with a structure or a jig for fixing the structure in a shortest cycle time of welding.

By performing welding based on the predetermined teaching data as described above, the quality of welding can be kept constant, and the cycle time of welding can be reduced. On the other hand, since the welding robot is difficult to perform fine adjustment during welding, welding by the welding robot has a problem that a deformation of a structure caused by welding, that is, a welding deformation becomes greater than a deformation caused by welding by manual work.

For example, Patent Document 1 discloses a welding deformation prediction system and a welding deformation prediction program that predict a welding deformation of an entire structure by an analysis of a finite element method (FEM) using inherent deformation data.

### PRIOR ART DOCUMENT

### PATENT DOCUMENT

Patent Document 1: JP 2012-117927 A

In addition, it is known that, in a case where welding is performed by a welding robot, a welding deformation of the entire structure changes according to the order of welding a plurality of welding lines provided on a member to be welded, that is, in an welding order.

Therefore, a welding deformation of the entire structure is predicted for each welding order so that the welding deformation does not become great, and an welding order having the smallest welding deformation needs to be included in the above-described teaching data.

Further, the teaching data includes not only the welding order but also, for example, an order at a time when a welding torch provided at a distal end of an arm of the welding robot moves outside the plurality of welding lines. When operating in this order, the welding robot might interfere with a member to be welded and a peripheral object such as a jig for fixing the member.

Therefore, the above-described teaching data needs to be configured so that the welding robot does not interfere with the member and the peripheral object.

### SUMMARY OF THE INVENTION

### PROBLEMS TO BE SOLVED BY THE INVENTION

Therefore, an object of the present invention is to provide a teaching data generation system and a program that reduce a welding deformation and prevent a welding robot from interfering with a member and a peripheral object.

### SOLUTIONS TO THE PROBLEMS

In order to solve the above object, the present invention is characterized by having the following configuration.

First, a first aspect of the invention of the present application provides a teaching data generation system for a welding robot, the teaching data including:
a plurality of welding indication points, the welding robot passing through the plurality of welding indication points when performing welding on a plurality of welding lines provided on a predetermined member,
a welding order in which the welding robot passes through the welding indication points,
avoidance indication points, the welding robot passing through the avoidance indication points not to interfere with the member and a peripheral object of the member when moving outside the plurality of welding lines, and
an avoidance order in which the welding robot passes through the avoidance indication points,
the teaching data generation system including:
   a teaching data reconstruction process of adjusting the welding order, the avoidance indication points, and the avoidance order to reconstruct the teaching data, and
   a teaching data output process of converting the teaching data reconstructed in the teaching data reconstruction process into a format acceptable by software for operating the welding robot and outputting the teaching data to the welding robot or the software,
   in which the teaching data reconstruction process includes:
      an indication point group reference process of referring to a plurality of welding groups where the welding indication points and the welding order are grouped respectively for the plurality of welding lines, and
      a group shuffling process of shuffling an order of the plurality of welding groups in accordance with a corrected welding order for reducing a welding deformation of the member.

Further, a second aspect of the invention provides the invention from the first aspect, in which the teaching data reconstruction process includes an interference avoidance process of adjusting the avoidance indication points and the avoidance order so that the welding robot does not interfere with the member and the peripheral object.

Further, a third aspect of the invention provides the invention from the first or second aspect, in which
the welding robot includes a rotatable joint, and
the plurality of welding indication points and the avoidance indication points each include a target value of the joint of the welding robot.

Further, a fourth aspect of the invention provides the invention from any one of first to third aspects, in which the teaching data generation system includes an indication point group setting process of, in a case where the plurality of welding groups is not set in advance, setting a plurality of temporary welding groups by automatically sorting the plurality of welding indication points respectively for the plurality of welding lines, and setting the plurality of welding groups by adding the avoidance indication points near start and end points of the plurality of temporary welding groups to the plurality of temporary welding groups.

A fifth aspect of the invention provides the invention from any one of the first to third aspects, in which the teaching data generation system includes an indication point group setting process of, in a case where the plurality of welding groups is set in advance, setting a plurality of temporary additional welding groups by sorting some of the plurality of welding indication points for some of the plurality of welding lines, and setting the plurality of additional welding groups by adding the avoidance indication points near start and end points of the plurality of temporary additional welding groups to the plurality of temporary additional welding groups.

Further, a sixth aspect of the invention provides the invention from any one of the first to fifth aspects, in which
the teaching data generation system includes a welding deformation reduction process of outputting the corrected welding order, and
in the welding deformation reduction process, prediction results of the welding deformation of the member are calculated respectively for welding group changed orders obtained by shuffling the order of the plurality of welding groups in a repeated manner, and a welding group changed order in which a prediction result of the welding deformation of the member is smaller than in an initial order of the plurality of welding groups is selected among the welding group changed orders as the corrected welding order.

Further, a seventh aspect of the invention provides the invention from the sixth aspect, in which in the welding deformation reduction process, a welding group changed order where a cycle time of welding is shorter than and the prediction result of the welding deformation of the member is smaller than in the initial order is selected among the welding group changed orders as the corrected welding order.

An eight aspect of the invention provides the invention from any one of the first to seventh aspects in which the peripheral object includes a jig for fixing the member.

Further, a ninth aspect of the invention provides a teaching data generation program for a welding robot, the teaching data including:
a plurality of welding indication points, the welding robot passing through the plurality of welding indication points when performing welding on a plurality of welding lines provided on a predetermined member,
a welding order in which the welding robot passes through the welding indication points,
avoidance indication points, the welding robot passing through the avoidance indication points not to interfere with the member and a peripheral object of the member when moving outside the plurality of welding lines, and
an avoidance order in which the welding robot passes through the avoidance indication points,
the teaching data generation program including:
   a teaching data reconstruction process of adjusting the welding order, the avoidance indication points, and the avoidance order to reconstruct the teaching data, and
   a teaching data output process of converting the teaching data reconstructed in the teaching data reconstruction process into a format acceptable by software for operating the welding robot and outputting the teaching data to the welding robot or the software,
   in which the teaching data reconstruction process includes:
      an indication point group reference process of referring to a plurality of welding groups where the welding indication points and the welding order are grouped respectively for the plurality of welding lines, and
      a group shuffling process of shuffling an order of the plurality of welding groups in accordance with a corrected welding order for reducing a welding deformation of the member.

### EFFECTS OF THE INVENTION

With the above configuration, according to the invention from each aspect of the present application, the following effects can be obtained.

First, according to the first aspect of the invention of the present application, the teaching data reconstruction process of the teaching data generation system includes a group shuffling process of shuffling the order of the plurality of welding groups in the corrected welding order for reducing a welding deformation of a predetermined member. In the plurality of welding groups, the plurality of welding indication points and the welding order are grouped respectively for the plurality of welding lines provided on a predetermined member. The welding robot passes through the plurality of welding indication points in the welding order when performing welding on the plurality of welding lines. Therefore, the present invention can provide the teaching data generation system that reduces a welding deformation and prevents the welding robot from interfering with a member and a peripheral object.

Further, according to the second aspect of the invention, the teaching data reconstruction process of the teaching data generation system includes the interference avoidance process of adjusting the avoidance indication points through which the welding robot passes not to interfere with the member and the peripheral object when the moving outside the plurality of welding lines and the avoidance order in which the welding robot passes through the avoidance indication points. Therefore, the invention can provide the teaching data generation system that reduces a welding deformation and prevents the welding robot from interfering with a member and a peripheral object.

Further, according to the third aspect of the invention, the welding robot includes the rotatable joint. Further, each of the welding indication points and the avoidance indication points includes a target value of the joint of the welding robot. Therefore, since the joint of the welding robot is driven in accordance with the welding order and the avoidance order to reach target values such as a rotation angle and three-dimensional coordinates defined in the welding indication points and the avoidance indication points included in the teaching data, the welding robot can operate at a position and at an attitude such that a welding deformation is reduced and interference with a member and a peripheral object is prevented.

Further, according to the fourth aspect of the invention, the teaching data generation system includes the indication point group setting process of, in a case where the plurality of welding groups is not set in advance, setting a plurality of temporary welding groups by automatically sorting the plurality of welding indication points respectively for the plurality of welding lines, and setting the plurality of welding groups by adding the avoidance indication points near start and end points of the plurality of temporary welding groups to the plurality of temporary welding groups. Therefore, the teaching data can be generated without setting welding groups in advance.

Further, according to the fifth aspect of the invention, the teaching data generation system includes the indication point group setting process of, in a case where the plurality of welding groups is set in advance, setting a plurality of temporary additional welding groups by distributing some of the plurality of welding indication points respectively for some of the plurality of welding lines, and setting a plurality of additional welding groups by adding the avoidance indication points near start and end points of the plurality of temporary additional welding groups to the plurality of temporary additional welding groups. Therefore, the teaching data can be generated by the preset welding groups and the newly set additional welding groups.

Further, according to the sixth aspect of the invention, the prediction results of a welding deformation of the member are calculated respectively for welding group changed orders obtained by shuffling the order of the plurality of welding groups in a repeated manner, and a welding group changed order in which the prediction result of the welding deformation of the member is smaller than in the initial order of the plurality of welding groups is selected among welding group changed orders as the corrected welding order. The welding deformation of the member can be reduced by shuffling the order of the plurality of welding groups where the plurality of welding indication points and the welding order are grouped respectively for the plurality of welding lines in accordance with the corrected welding order.

Further, according to the seventh aspect of the invention, a welding group changed order where the cycle time of welding is shorter than and the prediction result of a welding deformation of the member is smaller than in the initial order of the plurality of welding groups are selected among the welding group changed orders as the corrected welding order. The welding deformation of the member can be reduced and the cycle time of welding can be shorted by shuffling the order of the plurality of welding groups in accordance with the corrected welding order. In the plurality of welding groups, the plurality of welding indication points and the welding order are grouped respectively for the plurality of welding lines.

Further, according to the eighth aspect of the invention, in the interference avoidance process of the teaching data reconstruction process in the teaching data generation system, the avoidance indication points and the avoidance order are adjusted. The welding robot passes through the avoidance indication points not to interfere with a member and a jig when moving outside the plurality of welding lines. The welding robot passes through the avoidance indication points in the avoidance order. Therefore, the invention can provide the teaching data generation system that prevents the welding robot from interfering with a member and a jig.

Further, according to the ninth aspect of the invention, the teaching data reconstruction process of the teaching data generation program includes a group shuffling process of shuffling the order of the plurality of welding groups in accordance with the corrected welding order for reducing a welding deformation of a predetermined member. In the plurality of welding groups, the plurality of welding indication points and the welding order are grouped respectively for the plurality of welding lines provided on the member. The welding robot passes through the plurality of welding indication points in the welding order when performing welding on the plurality of welding lines. Therefore, the invention can provide the teaching data generation program that reduces a welding deformation and prevents the welding robot from interfering with a member and a peripheral object.

### BRIEF DESCRIPTION OF THE DRAWINGS

Fig. 1 is a view illustrating a schematic configuration of a welding robot and a member to be welding according to an embodiment of the present invention.
Fig. 2 is a flowchart of a teaching data generation system for the welding robot in Fig. 1.
Fig. 3 is a flowchart illustrating a teaching data capturing process in Fig. 2.
Fig. 4 is a diagram illustrating an input screen of the teaching data capturing process in Fig. 3.
Fig. 5 is a flowchart showing a welding deformation reduction process in Fig. 2.
Fig. 6 is a flowchart showing an inherent deformation prediction system in Fig. 5.
Fig. 7 illustrates data of a welding deformation predicted in the welding deformation reduction process in Fig. 5.
Fig. 8 is a flowchart illustrating a teaching data reconstruction process in Fig. 2.
Fig. 9 is an explanatory diagram illustrating initial teaching data in Fig. 2.
Fig. 10 is an explanatory diagram illustrating teaching data corrected from the initial teaching data in Fig. 9.
Fig. 11 is a flowchart illustrating a teaching data reconstruction process according to another embodiment of the present invention.

### DESCRIPTION OF EMBODIMENTS

An embodiment of the present invention will be described below with reference to the accompanying drawings.

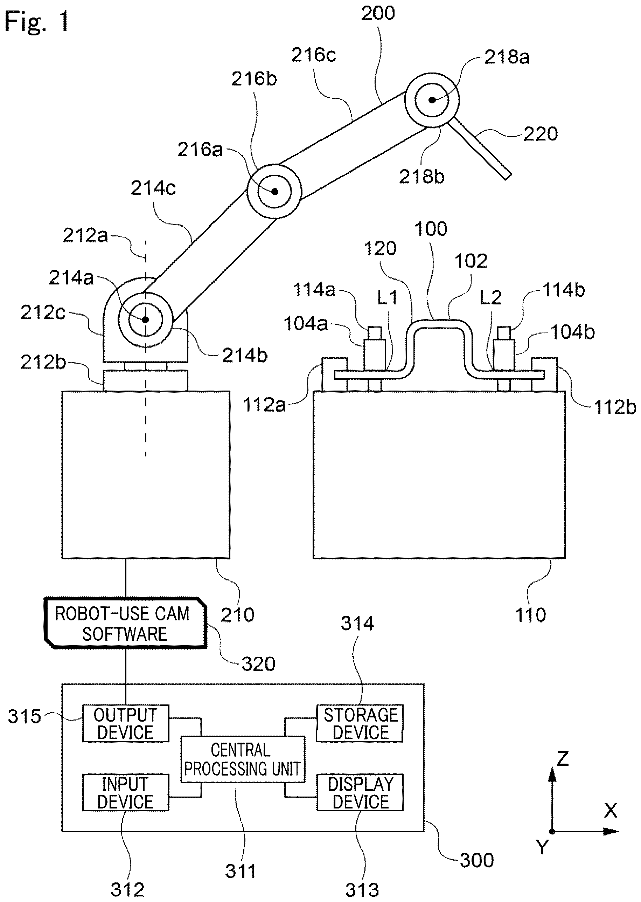

Fig. 1 is a view illustrating a schematic configuration of a welding robot and a member to be welding according to the embodiment of the present invention. In the following description, a horizontal direction in Fig. 1 is referred to as an X direction, a vertical direction is referred to as a Z direction, and a direction orthogonal to the X direction and the Z direction (a front-rear direction of a paper surface) is referred to as a Y direction.

A member 100 to be welded shown in Fig. 1 is a plate-shaped member extending on both left and right sides in the X direction in Fig. 1, and has a protrusion 102 protruding upward in the Z direction from an approximately center in the X direction. Further, the member 100 is disposed on an upper portion of a seating 110 having a flat rectangular parallelepiped shape. Both left and right ends of the member 100 in the X direction are sandwiched and fixed respectively by jigs 112a and 112b such as vises. Furthermore, on the upper surface of the member 100, cylindrical members 104a and 104b extending upward in the Z direction are disposed at both left and right sides in the X direction with respect to the protrusion 102. The cylindrical members 104a and 104b and the member 100 are sandwiched and fixed by jigs 114a and 114b such as vises. The member 100 and the cylindrical member 104a are welded at an approximately arc-shaped welding line L1 provided between the member 100 and the cylindrical member 104a. The member 100 and the cylindrical member 104b are welded at an approximately arc-shaped welding line L2 provided between the member 100 and the cylindrical member 104b. In such a manner, the member 100 and the cylindrical members 104a and 104b are manufactured as a welded structure 120.

The member 100 and the cylindrical members 104a and 104b are welded by a welding robot 200 adjacently disposed. The welding robot 200 is disposed on the upper surface of the seating 210 having the flat rectangular parallelepiped shape, and includes a plurality of rotatable joints. A first joint 212b of the welding robot 200 rotating about a first axis 212a extending in the Z direction is attached to the upper surface of the seating 210. One end of a first link 212c of the welding robot 200 extending in the Z direction is attached to the first joint 212b. A second joint 214b of the welding robot 200 rotating about a second axis 214a extending in the Y direction is attached to the other end of the first link 212c. One end of a second link 214c of the welding robot 200 extending in a beam shape is attached to the second joint 214b. A third joint 216b of the welding robot 200 rotating about a third axis 216a extending in the Y direction is attached to the other end of the second link 214c. One end of a third link 216c of the welding robot 200 extending in a beam shape is attached to the third joint 216b. A fourth joint 218b of the welding robot 200 rotating about a fourth axis 218a extending in the Y direction is attached to the other end of the third link 216c. A welding torch 220 of the welding robot 200 extending in a bar shape is attached to the fourth joint 218b.

The welding robot 200 described above is configured to be controlled by a computer 300 externally disposed. In particular, operations of the welding robot 200, such as the rotation of the first joint 212b, the second joint 214b, the third joint 216b, and the fourth joint 218b, the activation of the welding torch 220, and the like, are performed in accordance with robot-use computer-aided manufacturing (CAM) software 320 input from the computer 300.

The computer 300 includes a central processing unit 311, an input device 312, such as a keyboard, for inputting data necessary for operating the teaching data generation system to be described later and an activation instruction of the welding robot 200, a display device 313 such as a display for displaying a result of the teaching data generation system, a storage device 314 such as a memory for storing a program or the like for operating the teaching data generation system, and an output device 315 for performing conversion into an inherent format file of the robot-use CAM software 320 generated by the teaching data generation system and outputting the format file to the robot-use CAM software 320.

The central processing unit 311 controls the input device 312, the display device 313, the output device 315, and the welding robot 200, and is configured to be accessible to the storage device 314. The central processing unit 311 is configured to be able to operate the teaching data generation system using information input via the input device 312 and a program and data recorded in the storage device 314.

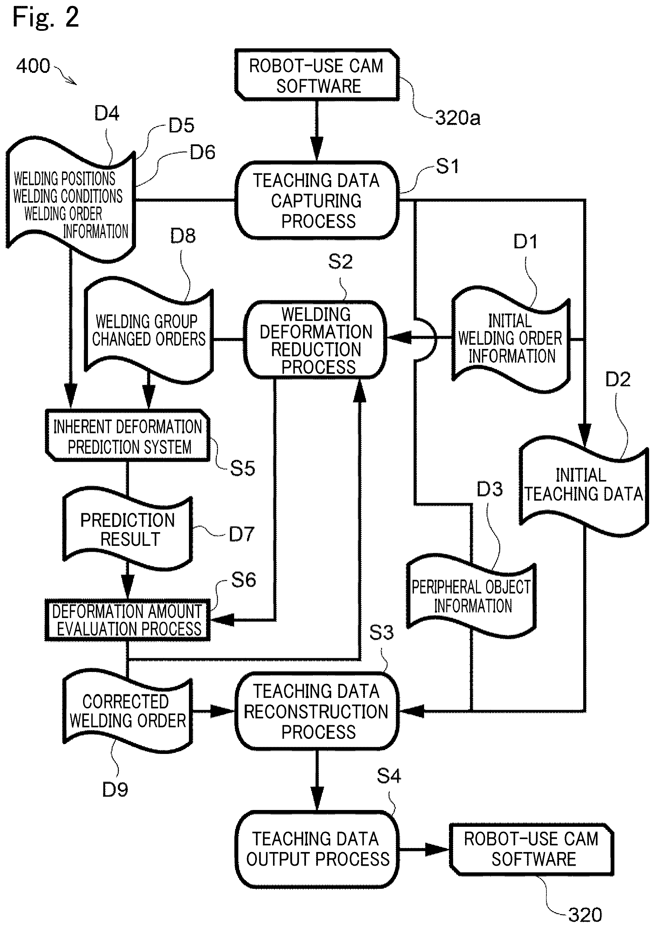

Fig. 2 is a flowchart of the teaching data generation system for the welding robot 200 in Fig. 1.

A teaching data generation system 400 inputs initial robot-use CAM software 320a preset in the welding robot 200 to the teaching data capturing process S1 before the teaching data generation system 400 is operated. The teaching data capturing process S1 is configured so that three-dimensional data of the member 100 and the cylindrical members 104a and 104b to be welded, three-dimensional data of the jigs 112a, 112b, 114a, and 114b for fixing the member 100 and the cylindrical members 104a and 104b, and three-dimensional data of the welding robot 200 are input via the input device 312 of the computer 300.

Further, the teaching data capturing process S1 is configured so that a plurality of welding indication points, initial welding order, avoidance indication points, initial avoidance order, and a plurality of welding groups are input. The welding torch 220 of the welding robot 200 passes through the plurality of welding indication points when performing welding on the plurality of welding lines L1 and L2 provided respectively between the member 100 and the cylindrical member 104a and between the member 100 and the cylindrical member 104b. The welding robot 200 passes through the welding indication points in the initial welding order. The welding robot 200 passes through the avoidance indication points not to interfere with the member 100, the cylindrical members 104a and 104b, and the jigs 112a, 112b, 114a, and 114b when moving outside the plurality of welding lines L1 and L2. The welding robot 200 passes through the avoidance indication points in the initial avoidance order. In the plurality of welding groups, the welding indication points and the initial welding order are grouped respectively for the plurality of welding lines L1 and L2.

The teaching data capturing process S1 described above is configured so that, in accordance with the input information described above, initial welding order information D1 including the initial welding order, initial teaching data D2, peripheral object information D3, welding positions D4, welding conditions D5, and welding order information D6 are output. The initial teaching data D2 includes the welding indication points, the initial welding order, the avoidance indication points, the initial avoidance order, and the welding groups. The peripheral object information D3 is determined based on the three-dimensional data of the member 100, the cylindrical members 104a and 104b, and the jigs 112a, 112b, 114a, and 114b. The welding positions D4 are determined based on the positions and shapes of the welding lines L1 and L2 and the initial welding order information D1.

Next, the teaching data generation system 400 inputs the initial welding order information D1 described above to the welding deformation reduction process S2. The welding deformation reduction process S2 is configured to be connected to an inherent deformation prediction system S5 for predicting a welding deformation of the entire structure by an analysis of a finite element method (FEM) using the inherent deformation data described in, for example, Patent Document 1. The inherent deformation prediction system S5 is configured so that prediction result D7 of the welding deformation of the member 100 and the cylindrical members 104a and 104b is calculated by inputting the welding positions D4, the welding conditions D5, and the welding order information D6 described above. The calculated prediction result D7 of the welding deformation is input to a deformation amount evaluation process S6, and is recorded in the storage device 314 of the computer 300 as the prediction result D7 of the welding deformation with respect to the welding order information D6.

In the deformation amount evaluation process S6 described above, the prediction result D7 of the welding deformation is recorded, and then an instruction to change the welding order from the initial welding order is sent to the welding deformation reduction process S2. After the instruction to change the welding order from the initial welding order is received, in the welding deformation reduction process S2, the welding group changed order D8 are obtained by shuffling the order of the plurality of welding groups where the welding indication points and the initial welding order are grouped respectively for the plurality of welding lines L1 and L2. In the welding deformation reduction process S2, the welding group changed order D8 described above is input to the inherent deformation prediction system S5, and the prediction result D7 of the welding deformation is calculated. As described above, the welding deformation reduction process S2 and the inherent deformation prediction system S5 are configured so that the prediction results D7 of the welding deformation are calculated respectively for the welding group changed orders D8 in a repeated manner, and a welding group changed order D8 where a prediction result D7 is smaller among the plurality of prediction results D7 of the welding deformation recorded in the storage device 314 than in the initial welding order is selected among the welding group changed orders D8 as a corrected welding order D9.

Next, the teaching data generation system 400 inputs the initial teaching data D2, the peripheral object information D3, and the corrected welding order D9 described above to the teaching data reconstruction process S3. The teaching data reconstruction process S3 is configured so that the teaching data that makes the welding deformation of the member 100 and the cylindrical members 104a and 104b small is reconstructed by shuffling, in accordance with the corrected welding order D9, the order of the plurality of welding groups where the welding indication points and the initial welding order are grouped respectively for the plurality of welding lines L1 and L2. Further, in the teaching data reconstruction process S3, when the teaching data is reconstructed, the avoidance indication points and the initial avoidance order are adjusted based on the peripheral object information D3 so that the welding robot 200 does not interfere with the member 100, the cylindrical members 104a and 104b, and the jigs 112a, 112b, 114a, and 114b.

Next, the teaching data generation system 400 inputs the teaching data reconstructed in the teaching data reconstruction process S3 to the teaching data output process S4. This teaching data output process S4 is configured so that the teaching data described above is converted into an inherent format file of the robot-use CAM software 320 for driving the first joint 212b, the second joint 214b, the third joint 216b, the fourth joint 218b, and the welding torch 220 of the welding robot 200, and the inherent format file is output to the robot-use CAM software 320.

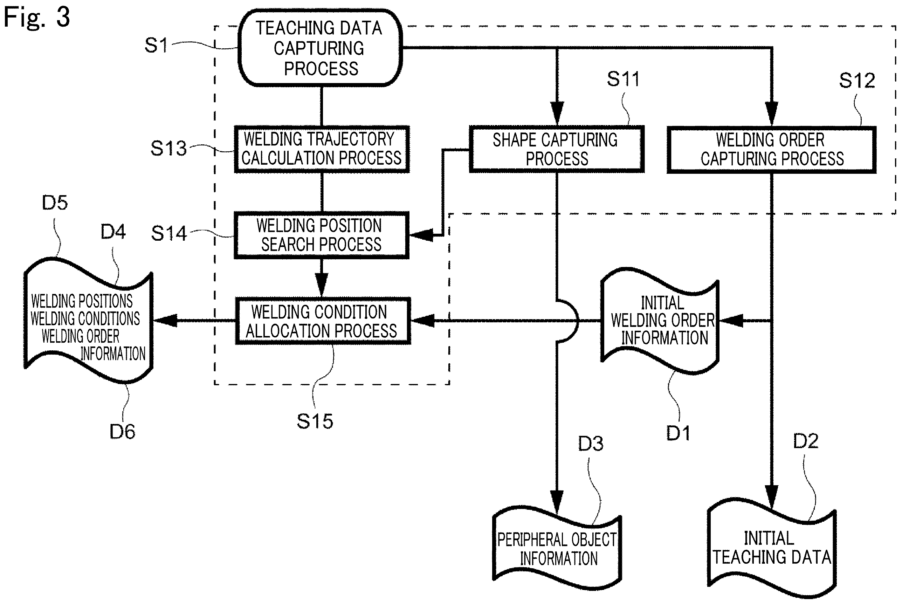

Fig. 3 is a flowchart illustrating the teaching data capturing process S1 in Fig. 2.

As described above, when initial robot-use CAM software 320a is input to the teaching data capturing process S1, the teaching data generation system 400 executes a shape capturing process S11 and a welding order capturing process S12. The shape capturing process S11 is configured so that information about a periphery of the member 100 to be welded is captured. The welding order capturing process S12 is configured so that the plurality of welding indication points, the initial welding order, the avoidance indication points, the initial avoidance order, and the plurality of welding groups are captured. The welding torch 220 of the welding robot 200 passes through the plurality of welding indication points when performing welding on the plurality of welding lines L1 and L2 provided respectively between the member 100 and the cylindrical member 104a and between the member 100 and the cylindrical member 104b. The welding robot 200 passes through the welding indication points in the initial welding order. The welding robot 200 passes through the avoidance indication points not to interfere with the member 100 and the cylindrical members 104a and 104b, and the jigs 112a, 112b, 114a, and 114b when moving outside the plurality of welding lines L1 and L2. The welding robot 200 passes through the avoidance indication points in the initial avoidance order. In the plurality of welding groups, the welding indication points and the initial welding order D1 are grouped respectively for the plurality of welding lines L1 and L2. Thereafter, the teaching data generation system 400 displays, on the display device 313 of the computer 300, an input screen for capturing information about the periphery of the member 100 to be welded, the welding indication points, the initial welding order, the avoidance indication points, the initial avoidance order, and the welding groups.

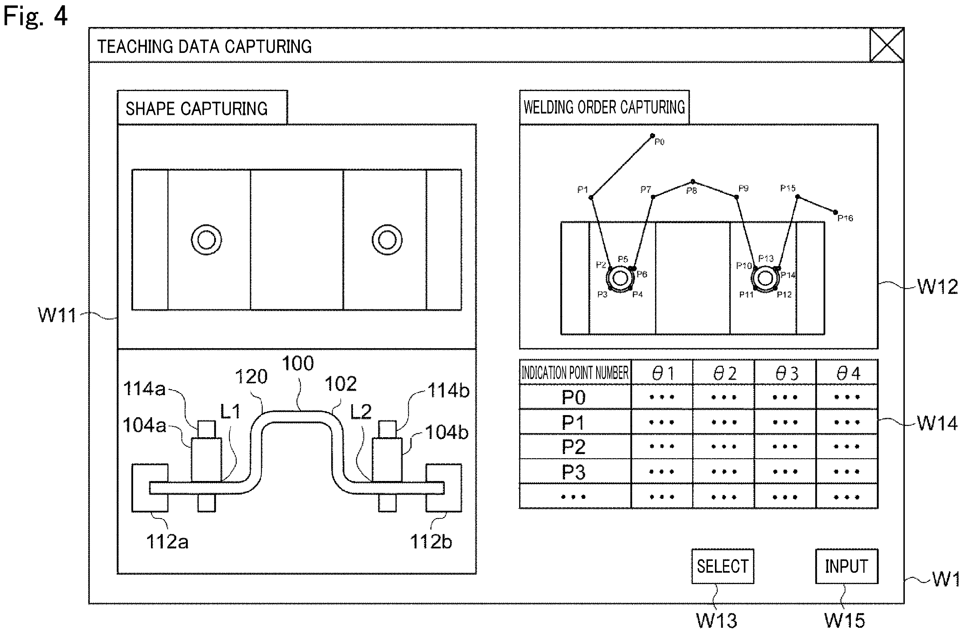

Fig. 4 a diagram showing the input screen of the teaching data capturing process S1 in Fig. 3.

The input screen W1 in Fig. 4 includes a shape capturing screen W11 displayed on a left part of the input screen W1, and a welding order capturing screen W12 displayed on a right part of the input screen W1. The shape capturing screen W11 is configured to show the information about the periphery of the member 100 to be welded. The welding order capturing screen W12 is configured to show the welding indication points, the initial welding order, the avoidance indication points, the initial avoidance order, and the welding groups.

In the embodiment, the storage device 314 of the computer 300 stores three dimensional data of the member 100 and the cylindrical members 104a and 104b to be welded, three dimensional data of the jigs 112a, 112b, 114a, and 114b that fixes the member 100 and the cylindrical members 104a and 104b, the three dimensional data of the welding robot 200, the plurality of welding indication points, the initial welding order, the avoidance indication points, the initial avoidance order, and the plurality of welding groups. The welding torch 220 of the welding robot 200 passes through the plurality of welding indication points when performing welding on the plurality of welding lines L1 and L2 provided respectively between the member 100 and the cylindrical member 104a and between the member 100 and the cylindrical member 104b. The welding robot 200 passes through the welding indication points in the initial welding order. The welding robot 200 passes through the avoidance indication points not to interfere with the member 100, the cylindrical members 104a and 104b, and the jigs 112a, 112b, 114a, and 114b when moving outside the plurality of welding lines L1 and L2. The welding robot 200 passes through the avoidance indication points in the initial avoidance order. In the plurality of welding groups, the welding indication points and the initial welding order are grouped respectively for the plurality of welding lines L1 and L2.

A selection button W13 configured to be able to select the information recorded in the storage device 314 described above is displayed below the welding order capturing screen W12.

The shape capturing screen W11 shows a plan view and a front view of the three-dimensional data of the member 100 and the cylindrical members 104a and 104b, the three-dimensional data of the jigs 112a, 112b, 114a, and 114b for fixing the member 100 and the cylindrical members 104a and 104b, and the three-dimensional data of the welding robot 200, not illustrated, selected by pressing the selection button W13 described above.

On the other hand, the welding order capturing screen W12 shows the initial teaching data D2 including the plurality of welding indication points, the initial welding order, the avoidance indication points, the initial avoidance order, and the plurality of welding groups selected by pressing the selection button W13 described above.

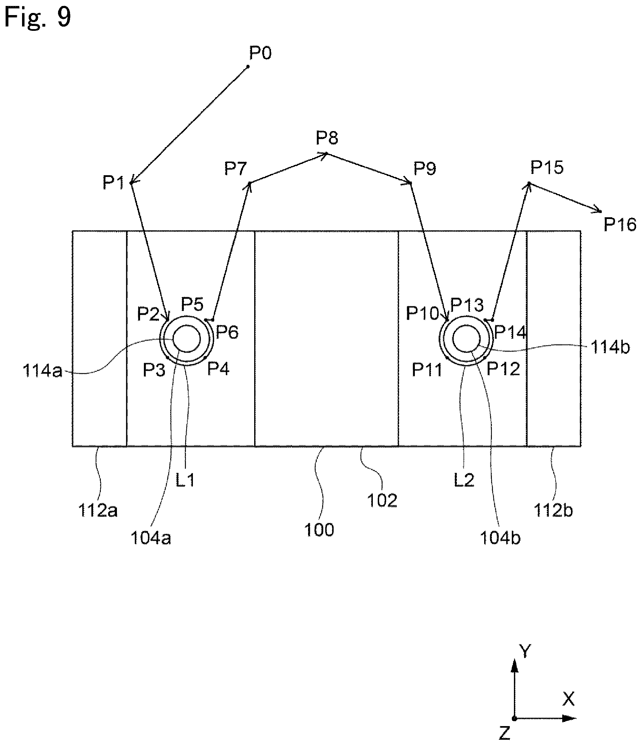

Fig. 9 is an explanatory diagram illustrating the initial teaching data D2 in Fig. 2.

In the initial teaching data D2, when the welding robot 200 starts welding, the distal end of the welding torch 220 is disposed at a avoidance indication point P0. The avoidance indication point P0 is set at a position away from the member 100 and the cylindrical members 104a and 104b toward the back side in the Y direction to prevent interference with the member 100, the cylindrical members 104a and 104b, and the jigs 112a, 112b, 114a, and 114b.

Next, the distal end of the welding torch 220 moves from the avoidance indication point P0 to an avoidance indication point P1. The avoidance indication point P1 is set at a position away from the member 100 and the cylindrical members 104a and 104b in the back side in the Y direction to prevent interference with the member 100, the cylindrical members 104a and 104b, and the jigs 112a, 112b, 114a, and 114b, and is closer to the member 100 and the cylindrical members 104a and 104b than the avoidance indication point P0 in the Y direction.

Next, the distal end of the welding torch 220 sequentially passes through welding indication points P2 to P5 starting from the avoidance indication point P1. The welding indication points P2 to P5 are set at positions on the approximately arc-shaped welding line L1 provided between the member 100 and the cylindrical member 104a. Therefore, the distal end of the welding torch 220 moves along the approximately arc-shaped welding line L1 when sequentially passing through the welding indication points P2 to P5. When the distal end of the welding torch 220 sequentially moves through the welding indication points P2 to P5, welding is performed at the welding line L1.

Next, the distal end of the welding torch 220 moves from the welding indication point P5 to a welding indication point P6. The welding indication point P6 is set at a position on the right side in the X direction with respect to the welding indication point P5 as a welding end on the welding line L1.

Next, the distal end of the welding torch 220 moves from the welding indication point P6 to an avoidance indication point P7. The avoidance indication point P7 is set at a position away from the member 100 and the cylindrical members 104a and 104b toward the back side in the Y direction to prevent interference with the member 100, the cylindrical members 104a and 104b, and the jigs 112a, 112b, 114a, and 114b.

Next, the distal end of the welding torch 220 moves from the avoidance indication point P7 to an avoidance indication point P8. The avoidance indication point P8 is set at a position away from the member 100 and the cylindrical members 104a and 104b toward the back side in the Y direction to prevent interference with the member 100, the cylindrical members 104a and 104b, and the jigs 112a, 112b, 114a, and 114b, and at the position on a right side in the X direction with respect to the avoidance indication point P7.

Next, the distal end of the welding torch 220 moves from the avoidance indication point P8 to an avoidance indication point P9. The avoidance indication point P9 is set at a position away from the member 100 and the cylindrical members 104a and 104b toward the back side in the Y direction to prevent interference with the member 100, the cylindrical members 104a and 104b, and the jigs 112a, 112b, 114a, and 114b, is closer to the member 100 and the cylindrical members 104a and 104b than the avoidance indication point P8 in the Y direction, and on a right side in the X direction with respect to the avoidance indication point P8.

Next, the distal end of the welding torch 220 sequentially passes through welding indication points P10 to P13 starting from the avoidance indication point P9. The welding indication points P10 to P13 are set at positions on the approximately arc-shaped welding line L2 provided between the member 100 and the cylindrical member 104b. Therefore, the distal end of the welding torch 220 moves along the approximately arc-shaped welding line L2 when sequentially passing through the welding indication points P10 to P13. When the distal end of the welding torch 220 sequentially passes through the welding indication points P10 to P13, welding is performed at the welding line L2.

Next, the distal end of the welding torch 220 moves from the welding indication point P13 to a welding indication point P14. The welding indication point P6 is set at a position on the right side in the X direction with respect to the welding indication point P13 as a welding end on the welding line L2.

Next, the distal end of the welding torch 220 moves from the welding indication point P14 to an avoidance indication point P15. The avoidance indication point P15 is set at a position away from the member 100 and the cylindrical members 104a and 104b toward the back side in the Y direction to prevent interfere with the member 100, the cylindrical members 104a and 104b, and the jigs 112a, 112b, 114a, and 114b.

Next, the distal end of the welding torch 220 moves from the avoidance indication point P15 to an avoidance indication point P16. The avoidance indication point P16 is set at a position on the right side in the X direction with respect to the avoidance indication point P15 to prevent interference with the member 100, the cylindrical members 104a and 104b, and the jigs 112a, 112b, 114a, and 114b.

Therefore, the initial welding order include a first welding order and a second welding order. In the first welding order, the distal end of the welding torch 220 sequentially passes through the welding indication points P2 to P5 set at the position on the welding line L1 from the avoidance indication point P1 and then moves from the welding indication point P6 to the avoidance indication point P7. In the second welding order, the distal end of the welding torch 220 sequentially passes through the welding indication points P10 to P13 set at the position on the welding line L2 from avoidance indication point P9 and then moves from the welding indication point P14 to the avoidance indication point P15. On the other hand, the initial avoidance order includes a first avoidance order, a second avoidance order, and a third avoidance order. In the first avoidance order, the distal end of the welding torch 220 moves from the avoidance indication point P0 to the avoidance indication point P1. In the second avoidance order, the distal end of the welding torch 220 moves from the avoidance indication point P7 to the avoidance indication point P9. In third avoidance order, the distal end of the welding torch 220 moves from the avoidance indication point P15 to the avoidance indication point P16.

In addition, the welding indication points P2 to P6 related to the welding at the welding line L1 and the first welding order of sequentially passing through the welding indication points P2 to P6 from the avoidance indication point P1 and moving to the avoidance indication point P7 are grouped in a first welding group. Further, the welding indication points P10 to P 14 related to the welding at the welding line L2 and the second welding order of sequentially passing through the welding indication points P10 to P14 from the avoidance indication point P9 and moving to the avoidance indication point P15 are grouped in a second welding group.

As described above, the initial teaching data D2 includes the welding indication points P2 to P6 and P10 to P14, the initial welding order including the first welding order and the second welding order, the avoidance indication points P0, P1, P7 to P9, P15, and P 16, the initial avoidance order including the first avoidance order, the second avoidance order, and the third avoidance order, the first welding group, and the second welding group. This initial teaching data D2 is displayed on the welding order capturing screen W12 illustrated in Fig. 4.

Further, a rotation angle data screen W14 is displayed between the welding order capturing screen W12 and the select button W13. The rotation angle data screen W14 includes a first rotation angle θ1 of the first joint 212b, a second rotation angle θ2 of the second joint 214b, a third rotation angle θ3 of the third joint 216b, and a fourth rotation angle θ4 of the fourth joint 218b input for the distal end of the welding torch 220 to reach the welding indication points P2 to P6 and P10 to P14 and the avoidance indication points P0, P1, P7 to P9, P15, and P16. The first rotation angle θ1 of the first joint 212b, the second rotation angle θ2 of the second joint 214b, the third rotation angle θ3 of the third joint 216b, and the fourth rotation angle θ4 of the fourth joint 218b are calculated in advance by, for example, inverse kinematics calculation based on the three-dimensional coordinates of the welding indication points P2 to P6 and P10 to P14 and the avoidance indication points P0, P1, P7 to P9, P15, and P16, and are recorded in the storage device 314 of the computer 300.

On the input screen W1 in Fig. 4, an input button W15 is displayed so as to be adjacent to the select button W13. By pressing the input button W15, the three-dimensional data of the member 100 and the cylindrical members 104a and 104b, the three-dimensional data of the jigs 112a, 112b, 114a, and 114b for fixing the member 100 and the cylindrical members 104a and 104b, and the three-dimensional data of the welding robot 200 displayed on the shape capturing screen W11 are input to the shape capturing process S11. Further, the welding indication points P2 to P6 and P10 to P14, the initial welding order, the avoidance indication points P0, P1, P7 to P9, P15, and P16, the initial avoidance order, the first welding group, and the second welding group displayed on the welding order capturing screen W12 are input to the welding order capturing process S12. The initial welding order include the first welding order of sequentially passing through the welding indication points P2 to P6 from the avoidance indication point P1 and moving to the avoidance indication point P7, and the second welding order of sequentially passing through the welding indication points P10 to P14 from the avoidance indication point P9 and moving to the avoidance indication point P15. The initial avoidance order includes the first avoidance order of moving from the avoidance indication point P0 to the avoidance indication point P1, the second avoidance order of moving from the avoidance indication point P7 to the avoidance indication point P9, and the third avoidance order of moving from the avoidance indication point P15 to the avoidance indication point P16.

The shape capturing process S11 is configured so that when the three-dimensional data of the member 100 and the cylindrical members 104a and 104b, the three-dimensional data of the jigs 112a, 112b, 114a, and 114b for fixing the member 100 and the cylindrical members 104a and 104b, and the three-dimensional data of the welding robot 200 are input, the three dimensional data is output as the peripheral object information D3.

The welding order capturing process S12 is configured so that when the welding indication points P2 to P6 and P10 to P14, the initial welding order, the avoidance indication points P0, P1, P7 to P9, P15, and P16, the initial avoidance order, the first welding group, and the second welding group are input, they are output as the initial teaching data D2. The initial welding order includes the first welding order of sequentially passing through the welding indication points P2 to P6 from the avoidance indication point P1 and moving to the avoidance indication point P7, and the second welding order of sequentially passing through the welding indication points P10 to P14 from the avoidance indication point P9 and moving to the avoidance indication point P15. The initial avoidance order includes the first avoidance order of moving from the avoidance indication point P0 to the avoidance indication point P1, the second avoidance order of moving from the avoidance indication point P7 to the avoidance indication point P9, and the third avoidance order of moving from the avoidance indication point P15 to the avoidance indication point P16. At this time, the welding order capturing process S12 is configured so that the initial welding order information D1 including the initial welding order, the first welding group, the second welding group, and the order of the first welding group and the second welding group are also output.

On the other hand, the teaching data generation system 400 executes a welding trajectory calculation process S13. The welding trajectory calculation process S13 is configured so that the trajectories of the welding lines L1 and L2 provided respectively between the member 100 and the cylindrical member 104a and between the member 100 and the cylindrical member 104b are calculated with reference to the three-dimensional data of the member 100 and the cylindrical members 104a and 104b recorded in the storage device 314 of the computer 300.

Next, the teaching data generation system 400 executes a welding position search process S14. The welding position search process S14 is configured so that a welding position where welding is performed by the welding torch 220 is searched for in accordance with the trajectories of the welding lines L1 and L2 calculated in the welding trajectory calculation process S13, the welding indication points P2 to P6 and P10 to P14, and the three-dimensional data of the member 100 and the cylindrical members 104a and 104b output in the shape capturing process S11.

Next, the teaching data generation system 400 executes a welding condition allocation process S15. The welding condition allocation process S15 is configured so that the welding positions D4, the welding conditions D5, and the welding order information D6 are output in accordance with the welding positions searched in the welding position search process S14 and the initial welding order information D1 output in the welding order capturing process S12.

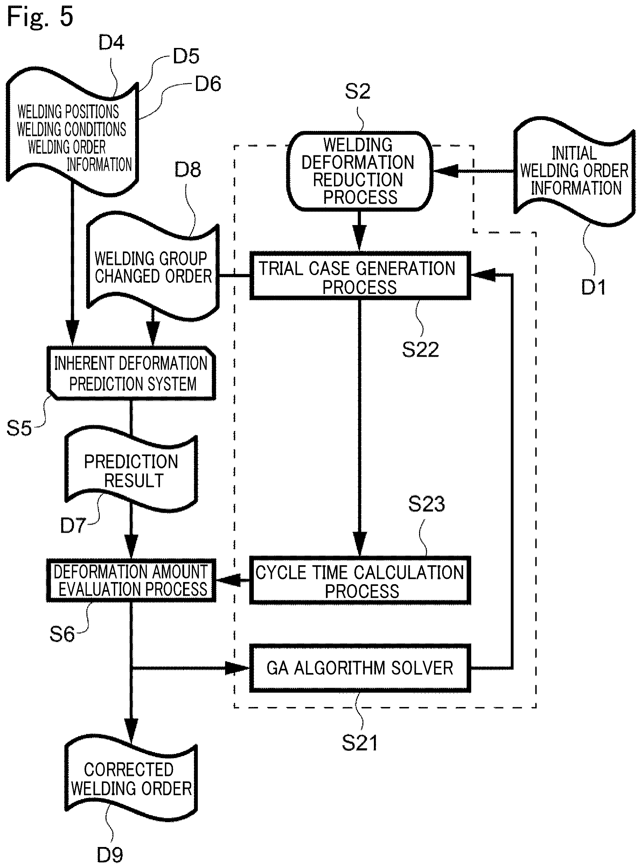

Fig. 5 is a flowchart illustrating the welding deformation reduction process S2 in Fig. 2.

As described above, when the initial welding order information D1 is output in the welding order capturing process S12 of the teaching data capturing process S1, the teaching data generation system 400 inputs the initial welding order information D1 to the welding deformation reduction process S2 to execute the welding deformation reducing process S2. At this time, the inherent deformation prediction system S5 connected to the welding deformation reduction process S2 is configured so that the welding positions D4, the welding conditions D5, and the welding order information D6 output in the welding condition allocation process S15 of the teaching data capturing process S1 are received, and the prediction result D7 of the welding deformation of the member 100 and the cylindrical members 104a and 104b are calculated.

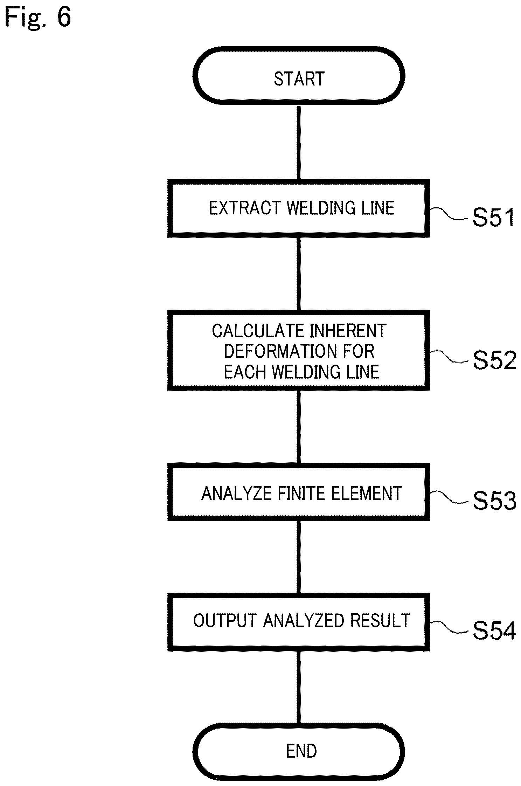

Fig. 6 is a flowchart illustrating the inherent deformation prediction system S5 in Fig. 5.

In the inherent deformation prediction system S5, the welding lines L1 and L2 provided respectively between the member 100 and the cylindrical member 104a and between the member 100 and the cylindrical member 104b are extracted in accordance with the welding positions D4, the welding conditions D5, and the welding order information D6 described above (step S51).

Next, inherent deformation data of the welding lines L1 and L2 of the structure 120 is calculated (step S52). The inherent deformation data is used for the FEM analysis for predicting the welding deformation of the structure 120 obtained by welding the member 100 and the cylindrical members 104a and 104b. When the inherent deformation data is calculated for the welding lines L1 and L2 of the structure 120, the inherent deformation data of the welding lines L1 and L2 is recorded in the storage device 314 of the computer 300 as an inherent deformation calculation result file.

Then, the structure 120 is divided into finite elements from figure data of the structure 120 to create an analysis model. The inherent deformation data of the welding lines L1 and L2 of the structure 120 recorded in the inherent deformation calculation result file is applied to the analysis model. Thus, the welding deformation of the structure 120 is calculated by elastic FEM analysis (step S53). When the welding deformation of the structure 120 is calculated, the prediction result D7 of the welding deformation of the structure 120, which is the analysis result, is output to the deformation amount evaluation process S6 (step S54).

Returning to Fig. 5, when the prediction result D7 of the welding deformation is input, the prediction result D7 is recorded in the storage device 314 of the computer 300 in the deformation amount evaluation process S6. Further, In the deformation amount evaluation process S6, the prediction result D7 of the welding deformation is recorded, and then an instruction to change the welding order from the initial welding order is sent to the welding deformation reduction process S2.

The instruction to change the welding order from the initial welding order is sent to a genetic algorithm (GA) solver S21 of the welding deformation reduction process S2. The GA algorithm solver S21 is configured so that when the instruction to change the welding order is received, the welding order included in the welding order information D6 is changed using a genetic algorithm, that is, the order of the welding groups included in the initial welding order information D1 are shuffled. For example, the initial welding order in which welding is performed on the second welding group after welding of the first welding group is replaced by an order in which welding is performed on the first welding group after welding of the second welding group. The first welding group includes the first welding order of sequentially passing through the welding indication points P2 to P6 from the avoidance indication point P1 and moving to the avoidance indication point P7. The second welding group includes the second welding order of sequentially passing through the welding indication points P10 to P14 from the avoidance indication point P9 and moving to the avoidance indication point P15.

Next, the teaching data generation system 400 executes a trial case generation process S22 of the welding deformation reduction process S2. The trial case generation process S22 is configured so that the welding group changed order D8 are output. The welding group changed order D8 is obtained by changing the welding order from the initial welding order in accordance with the welding order changed in the GA algorithm solver S21, that is, by shuffling the order of the welding groups included in the initial welding order information D1.

The inherent deformation prediction system S5 is configured so that the welding group changed order D8 output in the trial case generation process S22 is received, and the prediction result D7 of the welding deformation of the structure 120 is recalculated to be output to the deformation amount evaluation process S6 again.

As described above, in the welding deformation reduction process S2, the inherent deformation prediction system S5, and the deformation amount evaluation process S6, the prediction results D7 of the welding deformation are calculated respectively for the welding group changed orders D8 in a repeated manner, the calculated prediction results D7 are recorded in the storage device 314 of the computer 300, and a data file of the welding deformation is generated.

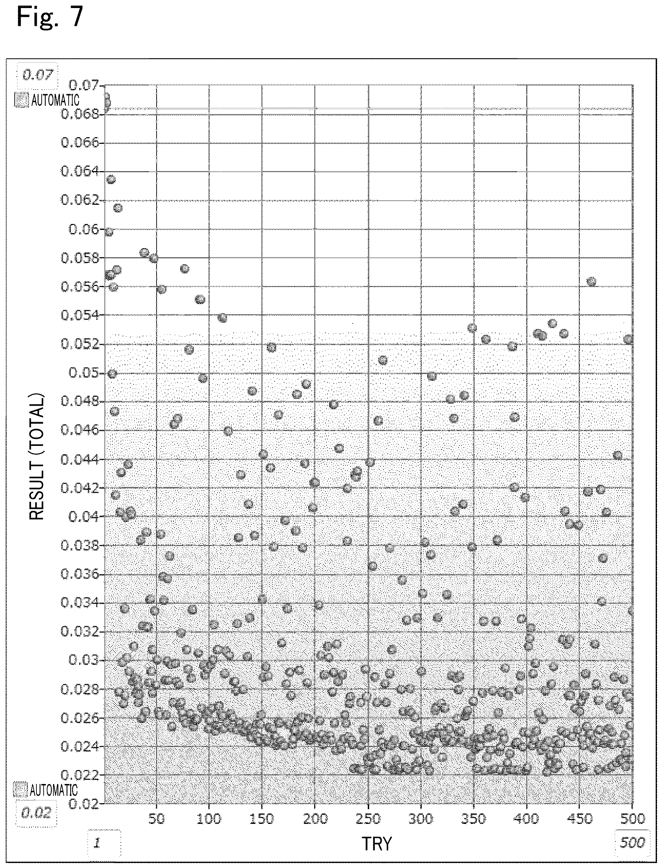

Fig. 7 illustrates data of the welding deformation predicted in the welding deformation reduction process S2 in Fig. 5. The horizontal axis of the data in Fig. 7 indicates the number of trials of the welding group changed orders D8 output in the trial case generation process S22 of the welding deformation reduction process S2. The vertical axis of the data in Fig. 7 indicates the magnitudes of the prediction results D7 of the welding deformation respectively for the welding group changed orders D8. Therefore, Fig. 7 shows data obtained by summarizing the magnitudes of the prediction results D7 with respect to the welding group changed orders D8.

The deformation amount evaluation process S6 is configured so that when the total number of the prediction results D7 recorded in the storage device 314 reaches a predetermined amount, a welding group changed order D8 in which the prediction result D7 of the welding deformation is smaller than in the initial welding order among the plurality of prediction results D7 of the welding deformation recorded in the storage device 314 is selected as the corrected welding order D9.

Returning to Fig. 5, when selecting the corrected welding order D9 in the deformation amount evaluation process S6, the teaching data generation system 400 executes a cycle time calculation process S23 of the welding deformation reduction process S2. The cycle time calculation process S23 intervenes in the deformation amount evaluation process S6, and the cycle time of each of the welding group changed orders D8 is calculated.

The deformation amount evaluation process S6 in the embodiment is configured so that the welding group changed order D8 in which the cycle time of welding is shorter than and the prediction result D7 of the welding deformation is smaller than in the initial welding order is selected as the corrected welding order D9.

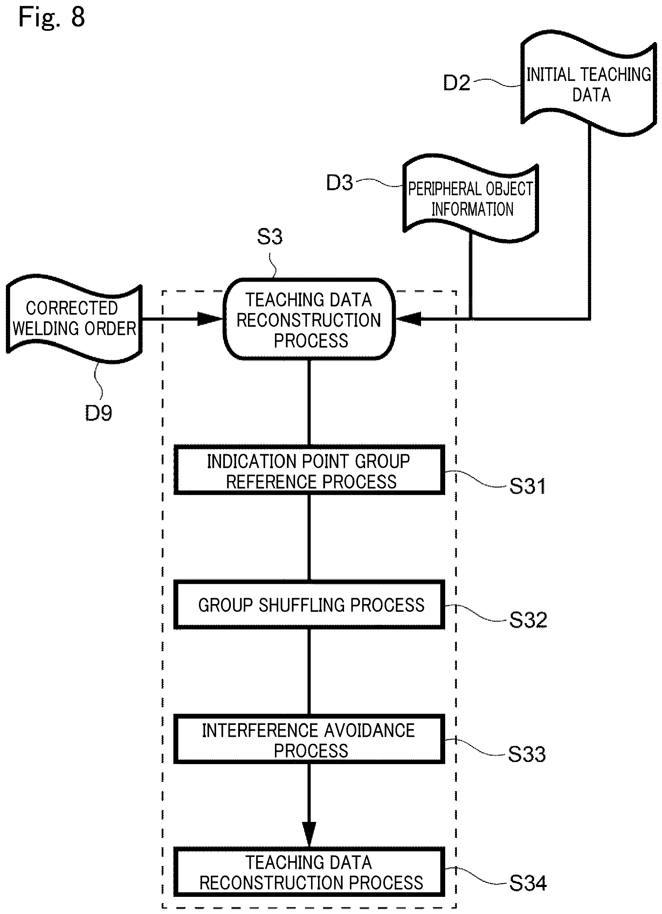

Fig. 8 is a flowchart illustrating the teaching data reconstruction process S3 in Fig. 2.

As described above, the teaching data generation system 400 inputs the initial teaching data D2 and the peripheral object information D3 output in the teaching data capturing process S1, and the corrected welding order D9 selected in the deformation amount evaluation process S6 to the teaching data reconstruction process S3 to execute the teaching data reconstruction process S3.

When the initial teaching data D2, the peripheral object information D3, and the corrected welding order D9 are input to the teaching data reconstruction process S3, the teaching data generation system 400 executes an indication point group reference process S31. The indication point group reference process S31 is configured so that the first welding group, the second welding group, and the order of the first welding group and the second welding group are referred based on the initial teaching data D2. The first welding group includes the first welding order of sequentially passing through the welding indication points P2 to P6 from the avoidance indication point P1 and moving to the avoidance indication point P7 illustrated in Fig. 9. The second welding group includes the second welding order of sequentially passing through the welding indication points P10 to P14 from the avoidance indication point P9 and moving to the avoidance indication point P15.

Next, when the first welding group, the second welding group, and the order of the first welding group and the second welding group are referred to in the indication point group reference process S31, the teaching data generation system 400 executes a group shuffling process S32. In the group shuffling process S32, the order of the plurality of welding groups described above is shuffled in accordance with the corrected welding order D9 for reducing the welding deformation of the structure 120 obtained by welding the member 100 and the cylindrical members 104a and 104b.

In the embodiment, it is assumed that the order of performing the welding in the first welding group after the welding in the second welding group is the corrected welding order D9. In this case, the order of the welding groups is changed to the order in which welding in the first welding group is performed after the welding in the second welding group. That is, the welding order is changed to the order in which welding is performed in the first welding order of sequentially passing through the welding indication points P2 to P6 from the avoidance indication point P1 and moving to the avoidance indication point P7 after the welding in the second welding order of sequentially passing through the welding indication points P10 to P14 from avoidance indication point P9 and moving to the avoidance indication point P15.

Next, in the group shuffling process S32, when a plurality of welding groups is shuffled, the teaching data generation system 400 executes an interference avoidance process S33. The interference avoidance process S33 is configured so that the avoidance indication points P0, P8, and P16 and the initial avoidance order are adjusted to prevent the welding robot 200 from interfering with peripheral objects, that is, the member 100, the cylindrical members 104a and 104b, and the jigs 112a, 112b, 114a, and 114b. The initial avoidance order includes the first avoidance order of moving from the avoidance indication point P0 to the avoidance indication point P1, the second avoidance order of moving from the avoidance indication point P7 to the avoidance indication point P9, and the third avoidance order moving from the avoidance indication point P15 to the avoidance indication point P16.

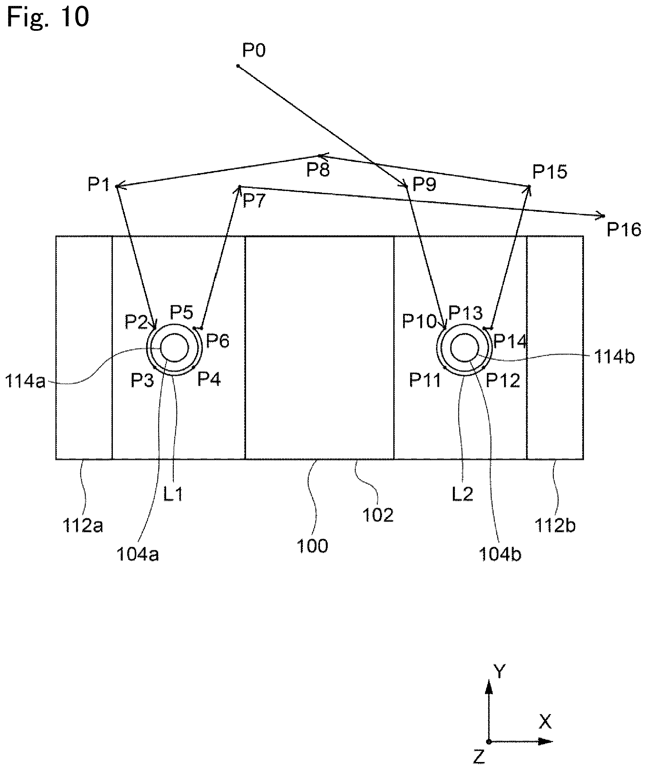

Fig. 10 is an explanatory diagram illustrating teaching data corrected from the initial teaching data in Fig. 9.

The corrected teaching data illustrated in Fig. 10 is obtained by shuffling the plurality of welding groups in the group shuffling process S32, and adjusting the avoidance indication points P0, P8, and P16 and the initial avoidance order in the interference avoidance process S33. This corrected teaching data includes that the distal end of the welding torch 220 moves in accordance with a first adjustment avoidance order of moving from the avoidance indication point P0 to the avoidance indication point P9, moves in accordance with the second welding order of sequentially passing through the welding indication points P10 to P14 from the avoidance indication point P9 and moving to the avoidance indication point P15, moves in accordance with a second adjustment avoidance order of moving from the avoidance indication point P15 to the avoidance indication point P1 via the avoidance indication point P8, moves in accordance with the first welding order of sequentially passing through the welding indication points P2 to P6 from the avoidance indication point P1 and moving to the avoidance indication point P7, and moves in accordance with a third adjustment avoidance order of moving from the avoidance indication point P7 to the avoidance indication point P16. With this posted teaching data, the welding deformation of the structure 120 obtained by welding the member 100 and the cylindrical members 104a and 104b is reduced, and interference with peripheral objects, that is, the member 100, the cylindrical members 104a and 104b, and the jigs 112a, 112b, 114a, and 114b is avoided.

Next, when the avoidance indication points P0, P8, and P16 and the initial avoidance order are adjusted in the interference avoidance process S33, the teaching data generation system 400 executes a teaching data reconstruction process S34. This teaching data reconstruction process S34 is configured so that the corrected teaching data described above is reconstructed and is output to the teaching data output process S4. In this teaching data output process S4, as described above, the corrected teaching data is converted into an inherent format file of the robot-use CAM software 320 for driving the first joint 212b, the second joint 214b, the third joint 216b, the fourth joint 218b, and the welding torch 220 of the welding robot 200, and the inherent format file is output to the robot-use CAM software 320.

As described above, the teaching data generation system 400 according to the present embodiment includes the teaching data reconstruction process S3 for reconstructing teaching data by adjusting the order of the first welding group and the second welding group, the avoidance indication points P0, P8, and P16, and the initial avoidance order, and the teaching data output process S4 for converting the teaching data reconstructed in the teaching data reconstruction process S3 into an inherent format file of the robot-use CAM software 320 for driving the first joint 212b, the second joint 214b, the third joint 216b, the fourth joint 218b, and the welding torch 220 of the welding robot 200, and outputting the inherent format file to the robot-use CAM software 320. In addition, the teaching data reconstruction process S3 includes the group shuffling process S32 for shuffling the order of the first welding group and the second welding group in accordance with the corrected welding order D9 for reducing the welding deformation of the member 100 and the cylindrical members 104a and 104b, and the interference avoidance process S33 for adjusting the avoidance indication points P0, P8, and P16 and the initial avoidance order so that the welding robot 200 does not interfere with the member 100 and the cylindrical members 104a and 104b, and the jigs 112a, 112b, 114a, and 114b.

The order of the first welding group and the second welding group can be changed in the group shuffling process S32 described above so that the welding deformation of the member 100 and the cylindrical members 104a and 104b is reduced. The avoidance indication points P0, P8, and P16 and the avoidance order can be adjusted in the interference avoidance process S33 so that the welding robot 200 is prevented from interfering with the member 100, the cylindrical members 104a and 104b, and the jigs 112a, 112b, 114a, and 114b. Therefore, it is possible to provide the teaching data generation system 400 that reduces the welding deformation and prevents the welding robot 200 from interfering with the member 100, the cylindrical members 104a and 104b, and the jigs 112a, 112b, 114a, and 114b, and the program for operating the teaching data generation system 400.

Further, the first joint 212b, the second joint 214b, the third joint 216b, the fourth joint 218b, and the welding torch 220 of the welding robot 200 are driven in accordance with the welding order and the movement order included in the teaching data so as to reach the first rotation angle θ1, the second rotation angle θ2, the third rotation angle θ3, and the fourth rotation angle θ4 defined at the welding indication points P2 to P6 and P10 to P14 and the avoidance indication points P0, P1, P7 to P9, P15, and P16. Therefore, the welding robot 200 can operate at such a position and attitude that reduces welding deformation and prevent interference with the member 100 and the cylindrical members 104a and 104b and the jigs 112a, 112b, 114a, and 114b.

In addition, by the calculation of the prediction results D7 of the welding deformation of the member 100 and the cylindrical members 104a and 104b for the welding group changed orders D8 obtained by shuffling the order of the first welding group and the second welding group in a repeated manner, a welding group changed order D8 in which the prediction result D7 of the welding deformation of the member 100 and the cylindrical members 104a and 104b is smaller than in the initial order of the first welding group and the second welding group is selected as the corrected welding order D9 for reducing the welding deformation of the member 100 and the cylindrical members 104a and 104b. In accordance with the corrected welding order D9, the order of the first welding group and the second welding group in which the plurality of welding indication points P2 to P6 and P10 to P14 and the first and second welding order are grouped respectively for the plurality of welding lines L1 and L2 is shuffled, and thus the welding deformation of the member 100 and the cylindrical members 104a and 104b can be reduced.

Further, the welding group changed order D8 where a cycle time of welding is shorter than and the prediction result D7 of the welding deformation of the member 100 and the cylindrical members 104a and 104b is smaller than in the initial order of the first welding group and the second welding group is selected among the welding group changed orders as the corrected welding order D9. The welding deformation of the member 100 and the cylindrical members 104a and 104b can be reduced and the cycle time of welding can be shortened by shuffling the order of the first welding group and the second welding group where the plurality of welding indication points P2 to P6 and P10 to P14 and the first and second welding orders are grouped respectively for the plurality of welding lines L1 and L2 in accordance with the corrected welding order D9.

Further, in the interference avoidance process S33 of the teaching data reconstruction process S3, the avoidance indication points P0, P8, and P16 and the avoidance order are adjusted. The welding robot 200 passes through the avoidance indication points P0, P8, and P16 not to interfere with the member 100, the cylindrical members 104a and 104b, and the jigs 112a, 112b, 114a, and 114b when moving outside the plurality of welding lines L1 and L2. The welding robot 200 passes through the avoidance indication points P0, P8, and P16 in the avoidance order. Therefore, it is possible to provide the teaching data generation system 400 that prevents the welding robot 200 from interfering with the member 100, the cylindrical members 104a and 104b, and the jigs 112a, 112b, 114a, and 114b.

In the present embodiment, in the shape capturing process S11 and the welding order capturing process S12 of the teaching data capturing process S1, the three dimensional data of the member 100 and the cylindrical members 104a and 104b, the three dimensional data of the jigs 112a, 112b, 114a, and 114b for fixing the member 100 and the cylindrical member 104a and 104b, the three dimensional data of the welding robot 200, the plurality of welding indication points P2 to P6 and P10 to P14, the initial welding order, the avoidance indication points P0, P1, P7 to P9, P15, and P16, the initial avoidance order, and the first and second welding groups recorded in the storage device 314 of the computer 300 are captured, but may be captured using another method. The welding torch 220 of the welding robot 200 passes through the plurality of welding indication points P2 to P6 and P10 to P14 when performing welding at the plurality of welding lines L1 and L2 provided respectively between the member 100 and the cylindrical member 104a and between the member 100 and the cylindrical member 104b. The welding robot 200 passes through the welding indication points P2 to P6 and P10 to P 14 in the initial welding order. The welding robot 200 passes through the avoidance indication points P0, P1, P7 to P9, P15, and P16 not to interfere with the member 100, the cylindrical members 104a and 104b, and the jigs 112a, 112b, 114a, and 114b when moving outside the plurality of welding lines L1 and L2. The welding robot 200 passes through the avoidance indication points P0, P1, P7 to P9, P15, and P16 in the initial avoidance order. In the first and second welding groups, the welding indication points P2 to P6 and P10 to P14 and the initial welding order are grouped respectively for the plurality of welding lines L1 and L2.

For example, a plurality of cameras may be connected to the computer 300 as the input device 312 to image the member 100 and the cylindrical members 104a and 104b, and the jigs 112a, 112b, 114a, and 114b that fix the member 100 and the cylindrical members 104a and 104b, thereby inputting the three-dimensional data captured in the shape capturing process S11 and the welding order capturing process S12. In addition, a virtual reality (VR) device imitating the welding torch 220 may be connected to the computer 300 as the input device 312, and a user may move the VR device to capture the plurality of welding indication points P2 to P6 and P10 to P14, the initial welding order, the avoidance indication points P0, P1, P7 to P9, P15, and P16, the initial avoidance order, and the first and second welding groups.

In the present embodiment, in the interference avoidance process S33 of the teaching data reconstruction process S3, the first avoidance order of moving from the avoidance indication point P0 to the avoidance indication point P1 is changed to the first adjustment avoidance order of moving from the avoidance indication point P0 to the avoidance indication point P9, the second avoidance order of moving from the avoidance indication point P7 to the avoidance indication point P9 is changed to the second adjustment avoidance order of moving from the avoidance indication point P15 to the avoidance indication point P1 via the avoidance indication point P8, and the third avoidance order of moving from the avoidance indication point P15 to the avoidance indication point P16 is changed to the third adjustment avoidance order of moving from the avoidance indication point P7 to the avoidance indication point P16. Thus, the avoidance indication points P0, P8, and P16 and the avoidance order are adjusted. However, the avoidance indication points P0, P8, and P16 and the avoidance order may be adjusted by another method.

For example, the avoidance indication points P0, P8, and P16 and the avoidance order may be adjusted by changing the three-dimensional coordinates of the avoidance indication points P0, P8, and P16. Alternatively, the avoidance indication points and the avoidance order may be adjusted by adding a new avoidance indication point. In this case, in the initial teaching data D2 output in the welding order capturing process S12 of the teaching data capturing process S1, the avoidance indication points are preferably configured as a coordinate trajectory of the distal end of the welding torch 220.

In the present embodiment, the teaching data output process S4 is configured so that the teaching data is converted into an inherent format file of the robot-use CAM software 320 and the inherent format file is output to the robot-use CAM software 320, but may be configured so that the inherent format file is directly output to the welding robot 200. Alternatively, the teaching data output process S4 may be configured so that the teaching data is converted into another format that enables reception by the robot-use CAM software 320 and the converted data is output to the robot-use CAM software 320 or the welding robot 200.

In the present embodiment, the first joint 212b, the second joint 214b, the third joint 216b, the fourth joint 218b, and the welding torch 220 of the welding robot 200 are driven to reach the first rotation angle θ1, the second rotation angle θ2, the third rotation angle θ3, and the fourth rotation angle θ4 defined at the welding indication points P2 to P6 and P10 to P14 and the avoidance indication points P0, P1, P7 to P9, P15, and P16, respectively, but may be driven to reach three-dimensional coordinates in a case where the three-dimensional coordinates of each joint are defined at the welding instruction points P2 to P6 and P10 to P14 and the avoidance instruction points P0, P1, P7 to P9, P15, and P16.

In the present embodiment, the welding order capturing process S12 of the teaching data capturing process S1 is configured so that the plurality of welding groups where the welding indication points and the initial welding order D1 are grouped respectively for the plurality of welding lines L1 and L2 is captured, but may be configured so that the welding groups are not captured.

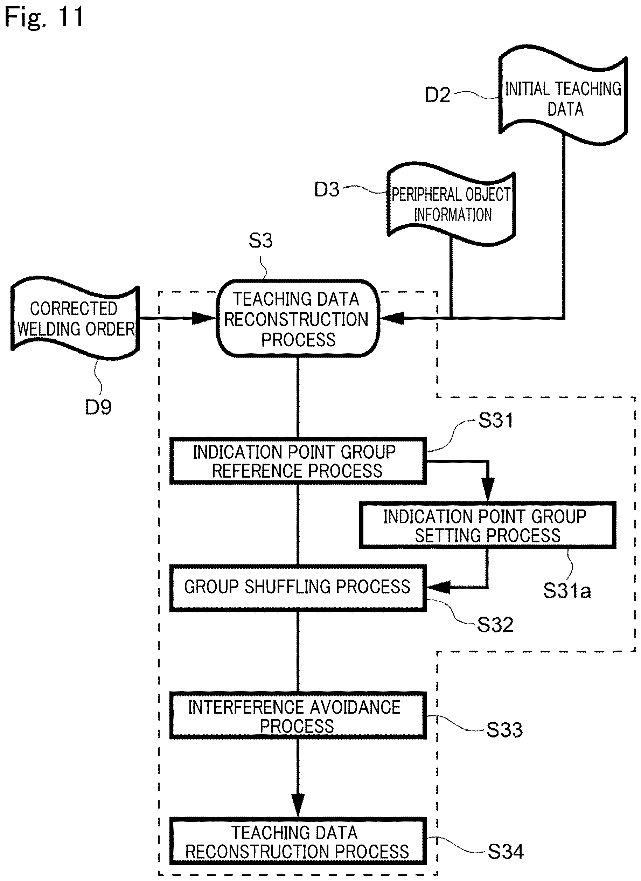

Fig. 11 is a flowchart illustrating the teaching data reconstruction process S3 according to another embodiment of the present invention.

As illustrated in Fig. 11, in another embodiment, after executing the indication point group reference process S31, the teaching data generation system 400 may execute an indication point group setting process S31a before executing the group shuffling process S32. The indication point group setting process S31a is configured so that the welding indication points P2 to P6 set on the welding line L1 are automatically sorted and set to a temporary first welding group and the welding indication points P10 to P14 set on the welding line L2 are automatically sorted and set to a temporary second welding group in a case where the first welding group and the second welding group are not set for the welding indication points P2 to P6 and P10 to P14 in the welding order capturing process S12, for example. On the other hand, in a case where the first welding group and the second welding group are set in the welding order capturing process S12, the teaching data generation system 400 executes the indication point group reference process S31 and then executes the group shuffling process S32 as in Fig. 8.

The indication point group setting process S31a may be configured so that any avoidance indication point is added either before or after the temporary first welding group and the temporary second welding group that have been automatically set as described above. For example, the indication point group setting process S31a may be configured so that the avoidance indication points P1 and P7 set before and after the welding indication points P2 to P6 is added to the temporary first welding group in the first welding order to form the first welding group, and the avoidance indication points P9 and P15 set before and after the welding indication points P10 to P14 are added to the temporary second welding group in the second welding order to form the second welding group. Alternatively, the indication point group setting process S31a may be configured so that adjacent avoidance indication points within a predetermined distance from the welding indication points P2 and P6, which are the start point and the end point of the temporary first welding group respectively, are extracted and added to the temporary first welding group to form the first welding group, and avoidance indication points within a specified distance from the welding indication points P10 and P14, which are the start point and the end point of the temporary second welding group respectively, are extracted and added to the temporary second welding group to form the second welding group.

The indication point group setting process S31a described above may be configured to be executed by a user's operation via the input device 312 even in a case where the first welding group and the second welding group are set in the welding order capturing process S12. In the indication point group setting process S31a, another additional welding group is set for a preset welding group in the welding order capturing process S12, and thus teaching data can be reconstructed.

### EXPLANATION OF REFERENCES

100 member
104a, 104b cylindrical member
112a, 112b, 114a, 114b peripheral object (jig)
200 welding robot
320 software (robot-use CAM software)
400 teaching data generation system
D9 corrected welding order
L1, L2 welding portion (welding line)
S3 teaching data reconstruction process
S32 group shuffling process
S33 interference avoidance process
S4 teaching data output process
P2 to P6, P10 to P14 welding indication point
P0, P1, P7 to P9, P15, P16 avoidance indication point

## Claims

1. A teaching data generation system for a welding robot, the teaching data including:
a plurality of welding indication points, the welding robot passing through the plurality of welding indication points when performing welding on a plurality of welding lines provided on a predetermined member,
a welding order in which the welding robot passes through the plurality of welding indication points,
avoidance indication points, the welding robot passing through the avoidance indication points not to interfere with the member and a peripheral object of the member when moving outside the plurality of welding lines, and
an avoidance order in which the welding robot passes through the avoidance indication points,
the teaching data generation system comprising:
a teaching data reconstruction process of adjusting the welding order, the avoidance indication points, and the avoidance order to reconstruct the teaching data; and
a teaching data output process of converting the teaching data reconstructed in the teaching data reconstruction process into a format acceptable by software for operating the welding robot and outputting the teaching data to the welding robot or the software,
wherein the teaching data reconstruction process includes:
an indication point group reference process of referring to a plurality of welding groups where the plurality of welding indication points and the welding order are grouped respectively for the plurality of welding lines, and
a group shuffling process of shuffling an order of the plurality of welding groups in accordance with a corrected welding order for reducing a welding deformation of the member.

2. The teaching data generation system according to claim 1, wherein the teaching data reconstruction process includes an interference avoidance process of adjusting the avoidance indication points and the avoidance order so that the welding robot does not interfere with the member and the peripheral object.

3. The teaching data generation system according to claim 1 or 2, wherein
the welding robot includes a rotatable joint, and
the plurality of welding indication points and the avoidance indication points each include a target value of the joint of the welding robot.

4. The teaching data generation system according to any one of claims 1 to 3, comprising an indication point group setting process of, in a case where the plurality of welding groups is not set in advance, setting a plurality of temporary welding groups by automatically sorting the plurality of welding indication points respectively for the plurality of welding lines, and setting the plurality of welding groups by adding the avoidance indication points near start and end points of the plurality of temporary welding groups to the plurality of temporary welding groups.

5. The teaching data generation system according to any one of claims 1 or 3, comprising an indication point group setting process of, in a case where the plurality of welding groups is set in advance, setting a plurality of temporary additional welding groups by sorting some of the plurality of welding indication points to some of the plurality of welding lines, and setting the plurality of additional welding groups by adding the avoidance indication points near start and end points of the plurality of temporary additional welding groups to the plurality of temporary additional welding groups.

6. The teaching data generation system according to any one of claims 1 or 5, comprising a welding deformation reduction process of outputting the corrected welding order,
wherein in the welding deformation reduction process, prediction results of the welding deformation of the member are calculated respectively for welding group changed orders obtained by shuffling the order of the plurality of welding groups in a repeated manner, and a welding group changed order where a prediction result of the welding deformation of the member is smaller than in an initial order of the plurality of welding groups is selected among the welding group changed orders as the corrected welding order.

7. The teaching data generation system according to claim 6, wherein in the welding deformation reduction process, the welding group changed order where a cycle time of welding is shorter than and the prediction result of the welding deformation of the member is smaller than in the initial order is selected among the welding group changed orders as the corrected welding order.

8. The teaching data generation system according to any one of claims 1 or 7, wherein the peripheral object includes a jig that fixes the member.

9. A teaching data generation program for a welding robot, the teaching data including:
a plurality of welding indication points, the welding robot passing through the plurality of welding indication points when performing welding on a plurality of welding lines provided on a predetermined member,
a welding order in which the welding robot passes through the plurality of welding indication points,
avoidance indication points, the welding robot passing through the avoidance indication points not to interfere with the member and a peripheral object of the member when moving outside the plurality of welding lines, and
an avoidance order in which the welding robot passes through the avoidance indication points,
the teaching data generation program comprising:
a teaching data reconstruction process of adjusting the welding order, the avoidance indication points, and the avoidance order to reconstruct the teaching data; and
a teaching data output process of converting the teaching data reconstructed in the teaching data reconstruction process into a format acceptable by software for operating the welding robot and outputting the teaching data to the welding robot or the software,
wherein the teaching data reconstruction process includes:
an indication point group reference process of referring to a plurality of welding groups where the plurality of welding indication points and the welding order are grouped respectively for the plurality of welding lines, and
a group shuffling process of shuffling an order of the plurality of welding groups in accordance with a corrected welding order for reducing a welding deformation of the member.
